# EUROPÄISCHE PATENTSCHRIFT

(11) **EP 1 095 319 B1**
(45) Veröffentlichungstag und Bekanntmachung des Hinweises auf die Patenterteilung: **03.04.2002**
(21) Anmeldenummer: 99945898.7
(22) Anmeldetag: 02.07.1999
(51) Int. Cl.: G05B 13/02

(54) **VERFAHREN ZUM BETREIBEN EINER REGELUNGSEINRICHTUNG UND VORRICHTUNG ZUR DURCHFÜHRUNG DES VERFAHRENS**
METHOD FOR OPERATING A CONTROL SYSTEM AND DEVICE FOR CARRYING OUT SAID METHOD
PROCEDE POUR ACTIONNER UN SYSTEME DE REGULATION ET DISPOSITIF POUR METTRE LEDIT PROCEDE EN OEUVRE

(30) Priorität: 07.07.1998 DE 19830341
(43) Veröffentlichungstag der Anmeldung: 02.05.2001
(73) Patentinhaber: SIEMENS AKTIENGESELLSCHAFT, 80333 München (DE)
(72) Erfinder: JUNK, Rainer, D-91091 Gro enseebach (DE)
(86) Internationale Anmeldenummer: DE9902057
(87) Internationale Veröffentlichungsnummer: WO0002103

(56) Entgegenhaltungen:
- DE-A- 3 445 791
- US-A- 4 292 534
- US-A- 4 748 814
- US-A- 5 610 843
- US-A- 5 893 055
- G.LEKUTAI ET AL: "self-tuning control of non-linear systems using neural network adaptive frame wavelets" 1997 INTERNATIONAL CONFERENCE ON SYSTEMS MAN AND CYBERNETICS, Bd. 2, 12. Oktober 1997 (1997-10-12), Seiten 1017-1022, XP002122897 usa
- PATENT ABSTRACTS OF JAPAN vol. 1997, no. 09, 30. September 1997 (1997-09-30) & JP 09 120303 A (CHICHIBU ONODA CEMENT CORP), 6. Mai 1997 (1997-05-06) in der Anmeldung erwähnt
- R.SANNER ET AL: "STRUCTURALLY DYNAMIC WAVELET NETWORKS FOR ADAPTIVE CONTROL OF ROBOTIC SYSTEMS" INTERNATIONAL JOURNAL OF CONTROL, Bd. 70, Nr. 3, Juni 1998 (1998-06), Seiten 405-421, XP000853782 uk
- S.LIU ET AL: "DIRECT ADAPTIVE CONTROL OF UNKNOWN NONLINEAR SYSTEMS USING WAVELET APPROXIMATION" 1997 IEEE INTERNATIONAL CONFERENCE ON INTELLIGENT PROCESSING SYSTEMS, Bd. 1, 28. Oktober 1997 (1997-10-28), Seiten 722-725, XP002122899 CHINA

## Beschreibung

Die Erfindung bezieht sich auf ein Verfahren zum Betreiben einer Regelungseinrichtung mit einem Regler, der abhängig von einer Anzahl von Reglerparametern mit einer Stellgröße auf eine Regelstrecke wirkt. Sie bezieht sich weiter auf eine Regelungseinrichtung zur Durchführung des Verfahrens.

Eine technische Anlage weist üblicherweise eine Anzahl von Regelungseinrichtungen auf, die einen möglichst ungestörten Ablauf des Betriebs der Anlage gewährleisten sollen. Eine derartige Regelungseinrichtung wirkt üblicherweise auf eine zugehörige Regelstrecke, so daß ein geschlossener Regelkreis entsteht. Hierbei mißt beispielsweise ein Fühler am Meßort der Regelstrecke die einzuhaltende Regelgröße. Weicht diese aufgrund einer Störgröße von einem vorgegebenen Sollwert ab, so wirkt der Regler der Regelungseinrichtung mit seiner Stellgröße auf ein der Regelstrecke zugeordnetes Stellglied ein. Die vom Regler gelieferte Stellgröße hängt dabei außer von der Abweichung der gemessenen Regelgröße von dem vorgegebenen Sollwert noch von einer Anzahl von Reglerparametern ab, über die beispielsweise die Reaktionsgeschwindigkeit und/oder die Einstellgenauigkeit des Reglers einstellbar ist.

Aufgrund fehlender Systemkenntnisse über das reale dynamische Verhalten der Regelstrecke basiert die Einstellung der Reglerparameter - die sogenannte Parametrisierung - eines solchen Reglers üblicherweise auf empirisch gewonnenen Daten, die beispielsweise bei der Inbetriebsetzung der Anlage ermittelt werden. Aufgrund dieser Daten werden für den jeweiligen Regler Reglerparameter vorgegeben, die beim weiteren Betrieb unverändert beibehalten werden. Bei einer derartigen Regelungseinrichtung kann jedoch eine Veränderung der Eigenschaften der Regelstrecke zu Beeinträchtigungen der Regelgüte, insbesondere zu Beeinträchtigungen der Einstellgenauigkeit und/oder der Reaktionsgeschwindigkeit des Reglers führen. Veränderungen der Eigenschaften der Regelstrecke können dabei insbesondere durch Lastpunktwechsel oder Änderung der Maschinencharakteristik, beispielsweise aufgrund von Alterung oder Verschmutzung, auftreten.

Aus dem Buch von O. Völlinger, Regelungstechnik, 6. Auflage, Hüttich Buchverlag Heidelberg, 1990, Kapitel 1.6, Seiten 14 bis 20, ist ein adaptives Regelungsverfahren bekannt, bei dem das durch schwankende Parameter der Regelstrecke verursachte veränderliche Systemverhalten zunächst in geeigneter Weise erfaßt und mit Hilfe der so gewonnenen Information eine Feststellung der Reglerparameter vorgenommen wird. Weiter ist aus der US 5,610,843 bekannt, Wavelet-Transformationen zur Charakterisierung von Regelstrecken einzusetzen, was auch in der JP 09120303 angesprochen wird. Weiterhin ist aus der DE 34 45 791 ein Dampfturbogeneratorsystem bekannt, bei dem der Dampfdruck und die Temperatur steuerbar sind.

In dem Artikel "self-tuning control of nonlinear systems using neural network adaptive frame wavelets", erschienen in 1997 International Conference on systems man and cybernetics, Band 2, 12. Oktober 1997, Seiten 1017-1022, ist ein spezielles neuronales Netz beschrieben, mit dem ein sich dynamisch verändernder Anlagenbetrieb steuerbar ist. Entsprechend dem darin vorgestellten mathematischen Modell wird eine Wavelet-transformation einer Eingangsfunktion für den Prozess vorgenommen. Diese Wavelettransformation ist Grundlage für die Abschätzung einer Ausgangsfunktion. Durch Vergleich der geschätzten Ausgangsfunktion mit einer gemessenen Ausgangsfunktion wird durch Iterationsschritte die geschätzte Ausgangsfunktion optimiert, um eine geeignete Regelung der Anlage vornehmen zu können.

Der Erfindung liegt daher die Aufgabe zugrunde, ein Verfahren zum Betreiben einer Regelungseinrichtung der oben genannten Art anzugeben, bei dem die Regelgüte und das Regelverhalten des Regelkreises auch bei einer Veränderung der Eigenschaften der Regelstrecke erhalten bleibt. Zudem soll eine Regelungseinrichtung zur Durchführung des Verfahrens angegeben werden.

Bezüglich des Verfahrens wird diese Aufgabe erfindungs gemäß gelöst, indem während des Betriebs des Reglers das Ubertragungsverhalten der Regelstrecke durch einen Vergleich einer Wavelet-Transformation des zeitlichen Verhaltens der Stellgröße mit einer Wavelet-Transformation des zeitlichen Verhaltens einer Regelgröße des Reglers der Regelstrecke in einem vorgebbaren Zeitfenster bestimmt wird, wobei ein der jeweiligen Wavelet-Transformation zugeordneter Zeitpunkt erfaßt wird, und wobei in Abhängigkeit von dem ermittelten Übertragungsverhalten der oder jeder Reglerparameter eingestellt wird.

Die Erfindung geht dabei von der Überlegung aus, daß die Regelgüte und das Regelverhalten des Regelkreises bei einer Veränderung der Eigenschaften der Regelstrecke auch dann erhalten bleibt, wenn die Veränderung im Verhalten der Regelstrecke erfaßt und zu einer Anpassung der Reglerparameter genutzt wird. Besonders geeignet zur Charakterisierung der Regelstrecke ist dabei deren Übertragungsverhalten. Eine Veränderung im Übertragungsverhalten der Regelstrecke sollte sich somit auf die Reglerparameter auswirken. Zur Vermeidung einer Beeinträchtigung der Funktionsfähigkeit der Regelstrecke erfolgt dabei die Neueinstellung des oder der Reglerparameter in Abhängigkeit vom ermittelten Übertragungsverhalten der Regelstrecke in der Art eines Online-Eingriffs während des Betriebs des Reglers.

Die Bestimmung des Übertragungsverhaltens der Regelstrecke während des Betriebs der Regelungseinrichtung erfolgt dabei mit einer Wavelet-Transformation. Dabei werden der zeitliche Verlauf der Stellgröße und einer Regelgröße des Reglers der Regelstrecke in gleicher Weise in einem vorgebbaren Zeitfenster mit einer Wavelet-Transformation analysiert. Das Verfahren der Wavelet-Transformation ist beispielsweise in der Zeitschrift Automatisierungstechnik, Ausgabe 2 1996, R. Ol-denbourg Verlag, Seite 64 bis 66, beschrieben. Bei dieser Analyse kann festgestellt werden, ob eine vorgebbare Komponente der Stellgröße in der Regelgröße enthalten ist. Dies geschieht durch eine Zerlegung der Stellgröße bzw. der Regelgröße in Komponenten einer sogenannten Wavelet-Familie in einem vorgebbaren Zeitfenster zu einem bestimmten Zeitpunkt. Eine Wavelet-Familie ist eine Familie von mathematischen Funktionen, die durch mathematische Streckung und/oder Verschiebung aus einer einzigen Ausgangsfunktion erzeugt werden. Die mathematische Streckung und/oder Verschiebung der Funktion bedeutet dabei eine Anpassung an verschiedene Frequenz- und Amplitudenanteile des zu untersuchenden Signals. Dabei ist der Zeitpunkt, wann die zu untersuchende Größe bestimmte Eigenschaften hat, aufgrund des Vorhandenseins vorgebbarer Wavelet-Komponenten im Rahmen des vorgebbaren Zeitfensters bestimmbar.

Das Übertragungsverhalten der Regelstrecke wird dabei mittels eines Vergleichs der Wavelet-Transformation des zeitlichen Verhaltens der Stellgröße mit der Wavelet-Transformation des zeitlichen Verhaltens der Regelgröße ermittelt. Dazu wird das Ergebnis der Analyse der Stellgröße und der Regelgröße in ein Differentialgleichungssystem übertragen. Die Erstellung des Differentialgleichungssystems dient der Festlegung einer mathematischen Funktion, die das Übertragungsverhalten der Regelstrecke charakterisiert.

Bei jeder Bestimmung des Übertragungsverhaltens der Regelstrecke wird ein der Wavelet-Transformation zugeordneter Zeitpunkt erfaßt. Dadurch sind Änderungen im Übertragungsverhalten der Regelstrecke dokumentierbar. Auf diese Weise ist die Regelungseinrichtung besonders einfach an vorgebbare Betriebszustände der Regelstrecke anpaßbar, die immer wieder beim Betrieb der Regelstrecke auftreten.

Das Verfahren wird vorteilhafterweise auf eine Regelungseinrichtung angewendet, die Teil einer Dampfturbinenanlage ist. Die Regler der Regelkreise einer Dampfturbinenanlage werden nämlich üblicherweise anhand von empirisch gewonnenen Daten parametrisiert. Dabei kommt es aufgrund von fehlenden Systemkenntnissen über das reale dynamische Verhalten der jeweiligen Dampfturbinenanlage zu langen Inbetriebsetzungszeiten. Auch erfolgt in der Regel beim Betrieb der Dampfturbinenanlage keine Anpassung der Reglerparameter an verschiedene Betriebszustände der Dampfturbinenanlage. Eine Nachführung der Reglerparameter des oder jeden Reglers der Dampfturbinenanlage beim Betrieb der Dampfturbinenanlage gewährleistet somit in besonderem Maße eine gleichbleibende Regelgüte und ein gleichbleibendes Regelverhalten des oder jeden Regelkreises.

Vorteilhafterweise ist die Stellgröße des Reglers ein Radraumdruckwert oder ein Dampfmassenstromwert der Dampfturbine. In vorteilhafter Ausgestaltung ist weiterhin die Regelgröße des Regelkreises ein Leistungswert, ein Drehzahlwert oder ein Druckwert des Arbeitsmediums der Dampfturbine.

Bezüglich der Vorrichtung wird die genannte Aufgabe gelöst mit einer Regleradaptionseinrichtung, die während des Betriebs des Reglers das Übertragungsverhalten der Regelstrecke bestimmt und in Abhängigkeit von dem aktuell ermittelten Übertragungsverhalten der Regelstrecke den oder jeden Reglerparameter einstellt.

Die mit der Erfindung erzielten Vorteile bestehen insbesondere darin, daß durch eine Nachführung der Reglerparameter beim Betrieb des Reglers eine vorgebbare Regelgüte bei allen Betriebszuständen der Regelstrecke gewährleistet ist. Dies erfolgt ohne eine Unterbrechung des Betriebs der Regelungseinrichtung. Außerdem weisen technische Anlagen, die die Regelungseinrichtung umfassen und das Verfahren anwenden, besonders geringe Inbetriebssetzungszeiten auf. Weiterhin sind mit dem Verfahren betriebene Regelungseinrichtungen besonders einfach an verschiedene Betriebszustände der Regelstrecke anpaßbar.

Ein Ausführungsbeispiel der Erfindung wird anhand einer Zeichnung näher erläutert. Darin zeigen:
- FIG 1: schematisch eine Dampfturbinenanlage mit einer Regelungseinrichtung und
- FIG 2: schematisch die Regelungseinrichtung gemäß Figur 1.

Gleiche Teile sind in allen Figuren mit den gleichen Bezugszeichen versehen.

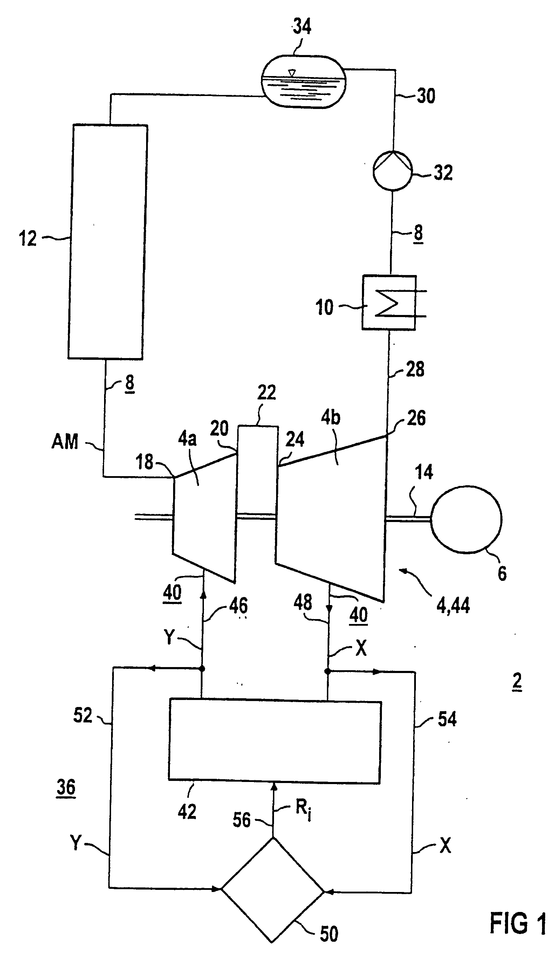

Die Dampfturbinenanlage 2 gemäß Figur 1 umfaßt eine Dampfturbine 4 mit angekoppeltem Generator 6 und in einem Wasser-Dampf-Kreislauf 8 einen der Dampfturbine 4 nachgeschalteten Kondensator 10 sowie einen Dampferzeuger 12. Die Dampfturbine 4 besteht aus einer ersten Druckstufe oder einem Hochdruckteil 4a und einer weiteren Stufe oder einem Mittel- und Niederdruckteil 4b, die über eine gemeinsame Welle 14 den Generator 6 antreiben.

Der Dampferzeuger 12 ist zur Zuführung von Arbeitsmedium AM zur Dampfturbine 4 dampfausgangsseitig an den Dampfeinlaß 18 des Hochdruckteils 4a der Dampfturbine 4 angeschlossen. Der Dampfauslaß 20 des Hochdruckteils 4a der Dampfturbine 4 ist über eine Überströmleitung 22 mit dem Dampfeinlaß 24 des Mittel- und Niederdruckteils 4b der Dampfturbine 4 verbunden. Der Dampfauslaß 26 des Mittel- und Niederdruckteils 4b der Dampfturbine 4 ist über eine Dampfleitung 28 an den Kondensator 10 angeschlossen. Dieser ist über eine Speisewasserleitung 30, in die eine Speisewasserpumpe 32 und ein Speisewasserbehälter 34 geschaltet sind, mit dem Dampferzeuger 12 so verbunden, daß ein geschlossener Wasser-Dampf-Kreislauf 8 entsteht.

Der Dampfturbinenanlage 2 ist zur Regelung eines Leistungswerts P, eines Drehzahlwerts N und/oder eines Druckwerts W des Arbeitsmediums AM der Dampfturbine 4 eine Regelungseinrichtung 36 zugeordnet. Die Regelungseinrichtung 36 ist Teil eines Regelkreises 40 und umfaßt einen Regler 42. Dieser ist zur Bildung des Regelkreises 40 mit einer Regelstrecke 44 verbunden. Die dem Regler 42 zugeordnete Regelstrecke 44 umfaßt dabei die Dampfturbine 4. Der Regler 42 ist zum Zuführen einer Stellgröße Y über die Stellgrößenleitung 46 mit der ihm zugeordneten Regelstrecke 44 verbunden. Ein der Regelstrecke 44 zugeordnetes Stellglied, das nicht näher dargestellt ist, führt in Abhängigkeit von der Stellgröße Y eine bestimmte Einstellung der Regelstrecke 44 herbei. Die Regelgröße X ist dem Regler 42 über die Regelgrößenleitung 48 zuführbar, so daß ein geschlossener Regelkreis 40 entsteht.

Der Regler 42 ist derart ausgelegt, daß er bei einer Abweichung der Regelgröße X von einem vorgebbaren Sollwert in proportionaler, integraler und/oder differentialer Weise die der Regelstrecke 44 zuzuführende Stellgröße Y verändern kann. Die vom Regler gelieferte Stellgröße hängt deswegen von einer Anzahl von Reglerparametern Rᵢ (i=1, 2, ..., n) ab. Die Einstellung der Reglerparameter Rᵢ ist die sogenannte Parametrisierung des Reglers 42.

Damit bei allen Betriebszuständen der Dampfturbinenanlage 2 eine besonders günstige Parametrisierung des Reglers 42 gegeben ist, weist die Regelungseinrichtung 36 eine Regleradaptionseinrichtung 50 zur Bestimmung von Reglerparametern Rᵢ auf. Hierfür ist der Regleradaptionseinrichtung 50 die Stellgröße Y über die von der Stellgrößenleitung 46 abzweigende Anschlußleitung 52 und die Regelgröße X über die von der Regelgrößenleitung 48 abzweigende Anschlußleitung 54 zuführbar. Zum Zuführen von in der Regleradaptionseinrichtung 50 ermittelten Reglerparametern Rᵢ ist die Regleradaptionseinrichtung 50 über die Reglerleitung 56 mit dem ihr zugeordneten Regler 42 verbunden.

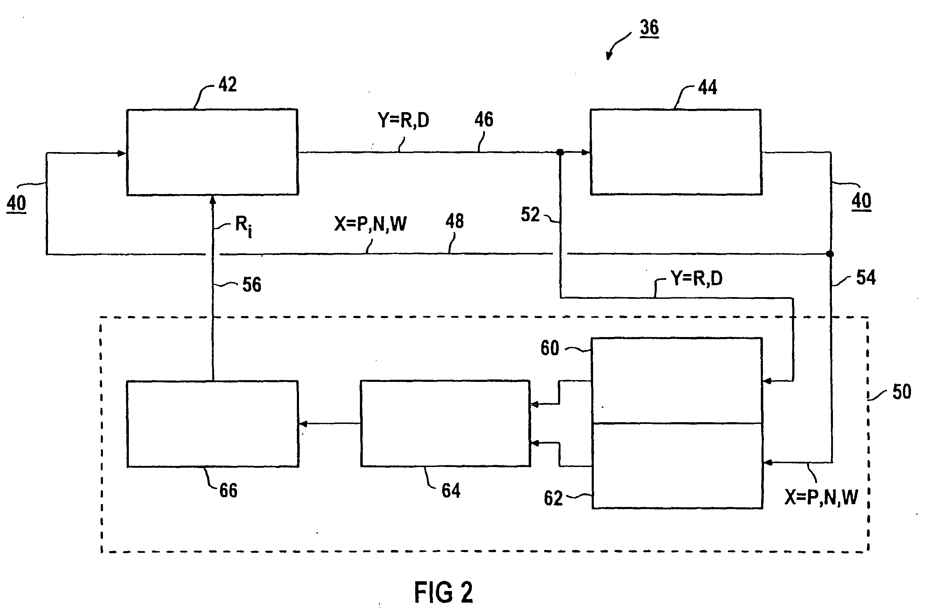

Wie in Figur 2 im weiteren Detail dargestellt, ist die Regleradaptionseinrichtung 50 über die von der Stellgrößenleitung 46 und die von der Regelgrößenleitung 48 abzweigende Anschlußleitung 52 bzw. 54 mit dem Regelkreis 40 verbunden. Die Regleradaptionseinrichtung 50 umfaßt ein Transformationsmodul 60 zur Analyse der Stellgröße Y, ein Transformationsmodul 62 zur Analyse der Regelgröße X, ein Berechnungsmodul 64 zur Ermittlung der Übertragungsfunktion der Regelstrecke 44 und ein Parametrisierungsmodul 66 zur Bestimmung der Reglerparameter R₁. Das Transformationsmodul 60 ist mit der Anschlußleitung 52, das Trans formationsmodul 62 mit der Anschlußleitung 54 verbunden. Die Transformationsmodule 60 und 62 wiederum sind datentechnisch an das Berechnungsmodul 64 angeschlossen, das wiederum ebenfalls datentechnisch mit dem Parametrisierungsmodul 66 verbunden ist. Die im Parametrisierungsmodul 66 bestimmten Reglerparameter Rᵢ sind über die Reglerleitung 56 dem Regler 42 zuführbar.

Beim Betrieb der Dampfturbinenanlage 2 wird mit Hilfe der Regelungseinrichtung 36 die Dampfturbine 4 betrieben. Als Stellgrößen dienen hierbei ein Radraumdruckwert R oder ein Dampfmassenstromwert D der Dampfturbine 4. Die dazugehörigen Regelgrößen sind ein Leistungswert P, ein Drehzahlwert N oder ein Druckwert W der Dampfturbine 4. Der Leistungswert P der Dampfturbine kann also beispielsweise durch eine entsprechende Einstellung des Radraumdruckwerts R geregelt werden. Hierfür wird ein vorgebbarer Sollwert des Leistungswerts P in nicht näher dargestellter Weise dem Regler 42 vorgegeben. Der Regler 42 wiederum gibt mit Hilfe der Reglerparameter Rᵢ über die Stellgrößenleitung 46 einen Radraumdruckwert R als Stellgröße Y an das nicht näher dargestellte Stellglied weiter. Dieses wiederum führt eine durch den Regler 42 hervorgerufene Änderung des Verhaltens der Regelstrecke 44 herbei. Der Istwert des Leistungswerts P der Regelstrecke 44 wird als Regelgröße X über die Regelgrößenleitung 48 an den Regler 42 weitergegeben.

Um bei allen Betriebszuständen der Dampfturbinenanlage 2 eine vorgebbare Regelgüte des Regelkreises 40 zu gewährleisten, werden Veränderungen im Verhalten der Regelstrecke 44 erfaßt und zu einer Anpassung der Reglerparameter Rᵢ genutzt. Dies erfolgt durch eine Ermittlung des Übertragungsverhaltens der Regelstrecke 44 beim Betrieb des Reglers 42. Die Aktualisierung des oder jeden Reglerparameters Rᵢ findet dann in Abhängigkeit von dem ermittelten Übertragungsverhalten der Regelstrecke 44 beim Betrieb des Reglers 42 statt.

Hierzu wird die Stellgröße Y über die Anschlußleitung 52 an das Transformationsmodul 60 der Regleradaptionseinrichtung 50 weitergegeben. Gleichzeitig wird auch über die Anschlußleitung 54 die Regelgröße X an das Transformationsmodul 62 der Regleradaptionseinrichtung weitergegeben. Das Transformationsmodul 60 zerlegt die der Regelstrecke 44 zugeführte Stellgröße Y mit Hilfe einer Wavelet-Transformation in einem vorgebbaren Zeitfenster zu einem bestimmten Zeitpunkt in auch als Wavelet-Komponenten bezeichnete Signalanteile eines Amplitudenspektrums eines bestimmten Frequenzbandes. Dies geschieht mit einer Familie von wavelets. Eine Familie von wavelets ist eine Familie mathematischer Funktionen, die durch mathematische Streckung und/oder Verschiebung aus einer einzigen Ausgangsfunktion erzeugt werden. Die Analyse des zeitlichen Verlaufs des Signals erfolgt dabei in einem vorgebbaren Zeitfenster. Dadurch ist der Zeitpunkt bestimmbar, wann das Signal eine bestimmte, durch die Wavelet-Transformation herausgefilterte, Eigenschaft aufgewiesen hat. Also kann mit diesem Verfahren festgestellt werden, ob eine vorgebbare Komponente des Signals zu einem bestimmten Zeitpunkt im Signal enthalten ist.

In gleicher Weise wie das Transformationsmodul 60 die Stellgröße Y analysiert, untersucht das Transformationsmodul 62 das zeitliche Verhalten der Regelgröße X. Hierdurch ist feststellbar, ob sich eine vorgebbare Komponente der Stellgröße Y in der Regelgröße X wiederfindet. Dabei ist der Zeitpunkt lokalisierbar, wann die Stellgröße Y bzw. die Regelgröße X eine bestimmte Komponente hatten. Dadurch ist es möglich, Änderungen der Stellgröße Y und/oder der Regelgröße X zeitlich einzuordnen.

Außerdem wird der jeweiligen Wavelet-Transformation ein Zeitpunkt zugeordnet. Dadurch sind Veränderungen im Verhalten der Regelstrecke 44 feststellbar. Bei sich wiederholenden Zuständen der Dampfturbine 4 können dann bestimmte Reglerparameter Rᵢ eingestellt werden, die sich als besonders günstig erwiesen haben.

Das Ergebnis der Wavelet-Transformationen der Stellgröße Y und der Regelgröße X wird an das Berechnungsmodul 64 weitergegeben. Dort dient es zur Aufstellung eines Differentialgleichungssystems. Die in dem Berechnungsmodul 64 durchgeführte Bestimmung des Differentialgleichungssystems führt zur Festlegung der Übertragungsfunktion der Regelstrecke 44. Die Übertragungsfunktion der Regelstrecke 44 wird an das Parametrisierungsmodul 66 weitergegeben. Dort werden, falls erforderlich, neue Reglerparameter Rᵢ berechnet. Für eine neue Einstellung der Reglerparameter Rᵢ des Reglers 42 werden diese beim Betrieb des Reglers 42 diesem über die Reglerleitung 56 zugeführt.

Bei der Regelungseinrichtung 36 der Dampfturbinenanlage 2 wird das Übertragungsverhalten der Regelstrecke 44 während des Betriebs des Reglers 42 bestimmt. In Abhängigkeit von dem ermittelten Übertragungsverhalten der Regelstrecke 44 wird dann in der Art eines Online-Eingriffs der oder jeder Reglerparameter Rᵢ eingestellt. Dadurch ist eine vorgebbare Regelgüte und ein vorgebbares Regelverhalten der Regelungseinrichtung 36 bei allen Betriebszuständen der Dampfturbinenanlage 2 gewährleistet.

## Patentansprüche

1. Verfahren zum Betreiben einer Regelungseinrichtung (36) mit einem Regler (42), der abhängig von einer Anzahl von Reglerparametern (Rᵢ) mit einer Stellgröße (Y) auf eine Regelstrecke (44) wirkt, bei dem während des Betriebs des Reglers (42) das Übertragungsverhalten der Regelstrecke (44) durch einen Vergleich einer Wavelet-Transformation des zeitlichen Verhaltens der Stellgröße (Y) mit einer Wavelet-Transformation des zeitlichen Verhaltens einer Regelgröße (X) des Reglers (42) der Regelstrecke (44) in einem vorgebbaren Zeitfenster bestimmt wird, wobei ein der jeweiligen Wavelet-Transformation zugeordneter Zeitpunkt erfaßt wird, und wobei in Abhängigkeit von dem ermittelten Übertragungsverhalten der oder jeder Reglerparameter (Rᵢ) eingestellt wird.

2. Verfahren nach Anspruch 1,
bei dem die Regelungseinrichtung (36) in einer Dampfturbinenanlage (2) angeordnet ist.

3. Verfahren nach Anspruch 1 oder 2,
bei dem die Stellgröße (Y) ein Radraumdruckwert (R) der Dampfturbine (4) ist.

4. Verfahren nach einem der Ansprüche 1 bis 3,
bei dem die Stellgröße (Y) ein Dampfmassenstromwert (D) der Dampfturbine (4) ist.

5. Verfahren nach einem der Ansprüche 1 bis 4,
bei dem die Regelgröße (X) ein Leistungswert (P) der Dampfturbine (4) ist.

6. Verfahren nach einem der Ansprüche 1 bis 5,
bei dem die Regelgröße (X) ein Drehzahlwert (N) der Dampfturbine (4) ist.

7. Verfahren nach einem der Ansprüche 1 bis 6,
bei dem die Regelgröße (X) ein Druckwert (W) des Arbeitsmediums der Dampfturbine (4) ist.

8. Regelungseinrichtung (36) mit einem Regler (42), der abhängig von einer Anzahl von Reglerparametern (Rᵢ) mit einer Stellgröße (Y) auf eine Regelstrecke (44) wirkt und mit einer Regleradaptionseinrichtung (50), die während des Betriebs des Reglers (42) das Übertragungsverhalten der Regelstrecke (44) durch einen Vergleich einer Wavelet-Transformation des zeitlichen Verhaltens der Stellgröße (Y) mit einer Wavelet-Transformation des zeitlichen Verhaltens einer Regelgröße (X) des Reglers (42) der Regelstrecke (44) in einem vorgebbaren Zeitfenster bestimmt, einen der jeweiligen Wavelet-Transformation zugeordneten Zeitpunkt erfaßt und in Abhängigkeit von dem ermittelten Übertragungsverhalten den oder jeden Reglerparameter (Rᵢ) einstellt.

## Claims

1. Method for operating a control device (36) having a regulator (42) which acts by means of a manipulated variable (Y) on a controlled system (44) as. a function of a number of regulator parameters (Rᵢ), in which, during operation of the regulator (42), the transfer function of the controlled system (44) is determined by comparison of awavelet transformation of the time response of the manipulated variable (Y) with a wavelet transformation of the time response of a controlled variable (X) of the regulator (42) for the controlled system (44) in a time window which can be predetermined, wherein a time associated with the respective wavelet transformation is recorded, and wherein the or each regulator parameter (Rᵢ) is set as a function of the transfer function which has been determined.

2. Method according to Claim 1,
in which the control device (36) is arranged in a steam turbine system (2).

3. Method according to Claim 1 or 2,
in which the manipulated variable (Y) is a rotor area pressure value (R) for the steam turbine (4).

4. Method according to one of Claims 1 to 3,
in which the manipulated variable (Y) is a steam mass flow value (D) for the steam turbine (4).

5. Method according to one of Claims 1 to 4,
in which the controlled variable (X) is a performance value (P) for the steam turbine (4).

6. Method according to one of Claims 1 to 5,
in which the controlled variable (X) is a rotation speed value (N) for the steam turbine (4).

7. Method according to one of Claims 1 to 6,
in which the controlled variable (X) is a pressure value (W) for the operating medium of the steam turbine (4).

8. Control device (36) having a regulator (42) which acts by means of a manipulated variable (Y) on a controlled system (44) as a function of anumber of regulator parameters (Rᵢ), and having a regulator adaptation device (50) which, during operation of the regulator (42), determines the transfer function of the controlled system (44) by comparison of a wavelet transformation of the time response of the manipulated variable (Y) with a wavelet transformation of the time response of a controlled variable (X) of the regulator (42) for the controlled system (44) in a time window which can be predetermined, records a time associated with the respective wavelet transformation, and sets the or each regulator parameter (Rᵢ) as a function of the transfer function which has been determined.

## Revendications

1. Procédé pour faire fonctionner un dispositif de régulation (36) comportant un régulateur (42) qui agit sur un système régulé (44) avec une grandeur réglante (Y) en fonction d'un certain nombre de paramètres de régulateur (Rᵢ), dans lequel, pendant le fonctionnement du régulateur (42), on détermine le comportement de transfert du système régulé (44) en comparant une transformation à ondelettes du comportement temporel de la grandeur réglante (Y) à une transformation à ondelettes du comportement temporel d'une grandeur réglée (X) du régulateur (42) du système régulé (44) dans une fenêtre temporelle pouvant être prescrite, dans lequel on détecte un instant associé à la transformation à ondelettes respective et dans lequel on règle le ou chaque paramètre de régulateur (Rᵢ) en fonction du comportement de transfert déterminé.

2. Procédé selon la revendication 1,
dans lequel le dispositif de régulation (36) se trouve dans une installation de turbine à vapeur (2).

3. Procédé selon la revendication 1 ou 2,
dans lequel la grandeur réglante (Y) est une valeur de pression spatiale de roue (R) de la turbine à vapeur (4).

4. Procédé selon l'une des revendications 1 à 3,
dans lequel la grandeur réglante (Y) est une valeur de flux massique de vapeur (D) de la turbine à vapeur (4).

5. Procédé selon l'une des revendications 1 à 4,
dans lequel la grandeur réglée (X) est une valeur de puissance (P) de la turbine à vapeur (4).

6. Procédé selon l'une des revendications 1 à 5,
dans lequel la grandeur réglée (X) est une valeur de vitesse de rotation (N) de la turbine à vapeur (4).

7. Procédé selon l'une des revendications 1 à 6,
dans lequel la grandeur réglée (X) est une valeur de pression (W) de la turbine à vapeur (4).

8. Dispositif de régulation (36) comportant un régulateur (42) qui agit sur un système régulé (44) avec une grandeur réglante (Y) en fonction d'un certain nombre de paramètres de régulateur (Rᵢ) et comportant un dispositif d'adaptation de régulateur (50) qui, pendant le fonctionnement du régulateur (42), détermine le comportement de transfert du système régulé (44) en comparant une transformation à ondelettes du comportement temporel de la grandeur réglante (Y) à une transformation à ondelettes du comportement temporel d'une grandeur réglée (X) du régulateur (42) du système régulé (44) dans une fenêtre temporelle pouvant être prescrite, qui détecte un instant associé à la transformation à ondelettes respective et qui règle le ou chaque paramètre de régulateur (Rᵢ) en fonction du comportement de transfert déterminé.
